# EUROPEAN PATENT APPLICATION

(11) **EP 4 114 046 A1**
(43) Date of publication of application: **04.01.2023**
(21) Application number: 20926708.7
(22) Date of filing: 24.03.2020
(51) Int. Cl.: H04W 4/06, H04W 72/00

(54) **MULTICAST COMMUNICATION METHOD AND COMMUNICATION APPARATUS**

(71) Applicant: Huawei Technologies Co., Ltd., Shenzhen, Guangdong 518129, (CN)
(72) Inventor: WU, Yizhuang, Shenzhen, Guangdong 518129 (CN); LI, Yongcui, Shenzhen, Guangdong 518129 (CN); GE, Cuili, Shenzhen, Guangdong 518129 (CN)
(74) Representative: Thun, Clemens
(86) International application number: PCT/CN2020/080950
(87) International publication number: WO 2021/189260

(57) **Abstract**

Embodiments of this application provide a multicast communication method and a communication apparatus, so that transmission of data of a multicast service can be implemented using a PDU session established by a terminal device, to improve network element utilization. The method may include: An AF network element sends, to a session management network element, first multicast service indication information indicating a first multicast service. The session management network element sends, based on the first multicast service indication information, multicast service information to an access network device that serves a terminal device. The access network device establishes an association relationship between the terminal device and the first multicast service based on the multicast service information, so that the access network device can send, when receiving data of the first multicast service, the data of the first multicast service to the terminal device using a PDU session. The session management network element further sends forwarding rule information of the first multicast service to a user plane network element, so that the user plane network element sends the data of the first multicast service to the access network device based on the forwarding rule information.

## Description

### TECHNICAL FIELD

This application relates to the field of communication technologies, and in particular, to a multicast communication method and a communication apparatus.

### BACKGROUND

In a 3rd generation partnership project (3rd generation partnership project, 3GPP) network, there is a scenario, namely, a point-to-multipoint data transmission scenario, in which same data is sent to a plurality of terminal devices.

In the point-to-multipoint data transmission scenario, there are two modes: unicast mode and multicast mode/broadcast mode. In the unicast mode, point-to-multipoint data transmission is implemented in a plurality of unicast modes, a plurality of transmission links may be established between a sender and a plurality of receivers, and the sender sends a plurality of duplicates over respective transmission links. In the multicast mode/broadcast mode, the sender sends one copy of data, and the plurality of receivers receive the same data packet. The point-to-multipoint data transmission is implemented in the multicast mode/broadcast mode, so that more transmission resources can be saved.

In a 5th generation (5th generation, 5G) network, how to implement data transmission in the multicast mode is an urgent technical problem to be resolved.

### SUMMARY

This application provides a multicast communication method and a communication apparatus, to save more transmission resources and improve network element utilization.

A first aspect of this application provides a multicast communication method. The method may be performed by a session management network element, or may be performed by a component (for example, a processor, a chip, or a chip system) in the session management network element. The method includes:

The session management network element receives first multicast service indication information from an application function (application function, AF) network element, where the first multicast service indication information indicates a first multicast service; sends, based on the first multicast service indication information, multicast service information to an access network device that serves a terminal device, where the multicast service information is used by the access network device to establish an association relationship between the terminal device and the first multicast service; and sends forwarding rule information of the first multicast service to a user plane network element.

According to the first aspect of this application, the session management network element sends, based on the first multicast service indication information from the AF network element, the multicast service information to the access network device that serves the terminal device, so that the access network device establishes the association relationship between the terminal device and the first multicast service, and the terminal device receives data of the first multicast service. The session management network element sends the forwarding rule information of the first multicast service to the user plane network element, so that the user plane network element forwards the data of the first multicast service. In this way, multicast transmission can be implemented, and more transmission resources can be saved. The multicast transmission can be implemented without adding another network element, so that utilization of a network element can be improved.

The association relationship between the terminal device and the first multicast service may be an association relationship between a protocol data unit (protocol data unit, PDU) session of the terminal device and the first multicast service. Transmission of the data of the first multicast service can be implemented using the PDU session of the terminal device without adding another network element, so that the network element utilization can be improved.

In a possible implementation, that the access network device establishes an association relationship between the terminal device and the first multicast service may include: The access network device includes information about the first multicast service in context information of the terminal device; the access network device includes information about the terminal device in context information of the first multicast service; or the access network device includes information about the first multicast service in a PDU session context of context information of the terminal device.

The information about the terminal device may include PDU session information (for example, a PDU session (session) identifier (identifier, ID) and a data network name (data network name, DNN)) of the terminal device and/or identification information of the terminal device. The identification information of the terminal device is used by the access network device to determine to send the first multicast service to the terminal device. Optionally, the identification information may be address information of the terminal device. The information about the first multicast service may be identification information of the first multicast service, service information of the first multicast service, and/or the like.

In a possible implementation, the session management network element receives a first message, where the first message includes information for determining the access network device that serves the terminal device. The session management network element may determine, based on the information, the access network device that serves the terminal device. The access network device that serves the terminal device may include an access network device corresponding to the PDU session of the terminal device.

In a possible implementation, the first message further includes the first multicast service indication information, so that the session management network element can learn that the data of the first multicast service needs to be transmitted.

The first message is from a policy control network element or a network exposure function network element. The information for determining the access network device that serves the terminal may be an identifier of the terminal device and the PDU session (session) ID, an identifier of the terminal device and the address information of the terminal device, or an SM policy association ID. The session management network element may determine, based on the SM policy association ID, the access network device that serves the terminal device. The AF network element may send a second message to the policy control network element or the network exposure function network element. The policy control network element or the network exposure function network element sends the first message to the session management network element. The second message may include the identification information of the terminal device. Optionally, the identification information of the terminal device may be the address information of the terminal device. The policy control network element may be a policy control network element corresponding to the PDU session of the terminal device.

In a possible implementation, the session management network element receives first indication information from the access network device, where the first indication information indicates whether the access network device has joined transmission of the first multicast service.

The session management network element sends the forwarding rule information of the first multicast service to the user plane network element when the first indication information indicates that the access network device has not joined the transmission of the first multicast service, so that the user plane network element sends the data of the first multicast service to the access network device.

The session management network element does not need to send the forwarding rule information of the first multicast service to the user plane network element when the first indication information indicates that the access network device has joined the transmission of the first multicast service, to reduce signaling overheads.

In a possible implementation, before that the session management network element sends forwarding rule information of the first multicast service to a user plane network element, the session management network element receives multicast service transmission tunnel information from the access network device, where the multicast service transmission tunnel information is used by the user plane network element to send the data of the first multicast service to the access network device. The multicast service transmission tunnel information may be understood as information about a tunnel that is between the user plane network element and the access network device and that is for transmitting the first multicast service. The access network device may send the multicast service transmission tunnel information to the session management network element, so that the session management network element learns that there is the tunnel that is between the user plane network element and the access network device and that is for transmitting the first multicast service. The multicast service transmission tunnel information may include a tunnel identifier and IP address information.

In a possible implementation, when the session management network element learns of the multicast service transmission tunnel information, the forwarding rule information that is of the first multicast service and that is sent by the session management network element to the user plane network element may include the multicast service transmission tunnel information, so that the user plane network element sends the data of the first multicast service to the access network device based on the multicast service transmission tunnel information.

In a possible implementation, the user plane network element may be a user plane network element corresponding to the PDU session of the terminal device, that is, a network element transmitting the first multicast service in a unicast communication mode, so that utilization of a core network element is improved.

In a possible implementation, the session management network element sends user plane transmission information to the AF network element, where the user plane transmission information is used by the AF network element to send the data of the first multicast service to the user plane network element. It may be understood that the session management network element notifies, using the user plane transmission information, the AF network element of how to send the data of the first multicast service to the user plane network element.

In a possible implementation, the session management network element sends user plane transmission information to the AF network element when determining that the user plane network element needs to join the transmission of the first multicast service, where the user plane transmission information is used by the AF network element to send the data of the first multicast service to the user plane network element. On the contrary, the session management network element does not need to send the user plane transmission information to the AF network element when determining that the user plane network element does not need to join the transmission of the first multicast service.

The user plane network element may be a user plane network element selected by the session management network element. To be specific, the session management network element sends the user plane transmission information to the AF network element when determining that the user plane network element selected by the session management network element needs to join the transmission of the first multicast service, so that the AF network element can send the data of the first multicast service to the user plane network element.

In a possible implementation, the user plane transmission information may include one or more of the following: address information of the PDU session, address information corresponding to the user plane network element, or second indication information, where the second indication information is used by the AF network element to determine target address information of the data of the first multicast service, that is, used by the AF network element to determine a specific user plane network element to which the data of the first multicast service is to be sent. The address information may include an IP address.

In a possible implementation, the session management network element receives quality of service control information of the first multicast service from the policy control network element; determines a quality of service flow identifier and quality of service configuration information of the first multicast service based on the quality of service control information; and sends the quality of service flow identifier and the quality of service configuration information to the access network device, so that the access network device sends the data of the first multicast service to the terminal device based on the quality of service flow identifier and the quality of service configuration information.

In a possible implementation, the multicast service information includes one or more of the following: the first multicast service indication information, the multicast service transmission tunnel information, or a multicast group identifier. The multicast service transmission tunnel information is used by the user plane network element to send the data of the first multicast service to the access network device. The multicast group identifier identifies a multicast group corresponding to the first multicast service.

A second aspect of this application provides a multicast communication method. The method may be performed by an access network device, or may be performed by a component (for example, a processor, a chip, or a chip system) in the access network device. The method includes:

The access network device receives a second message, where the second message includes multicast service information corresponding to a first multicast service; and establishes an association relationship between a terminal device and the first multicast service based on the second message.

According to the second aspect of this application, the access network device establishes the association relationship between the terminal device and the first multicast service based on the second message, so that the terminal device can receive data of the first multicast service, to implement multicast transmission, and more transmission resources can be saved. The multicast transmission can be implemented without adding another network element, so that utilization of a network element can be improved.

In a possible implementation, the second message is from an access management network element, and the second message is a PDU session management message of the terminal device. Optionally, a session management network element may send the second message to the access network device via the access management network element. The PDU session management message may be a PDU session establishment message or a PDU session modification message. Optionally, the second message may be an N2 request message sent by the access management network element to the access network device.

In a possible implementation, the multicast service information includes first multicast service indication information, and the first multicast service indication information indicates or identifies the first multicast service, that is, indicates that transmission of the first multicast service needs to be performed.

In a possible implementation, when the access network device receives the first multicast service indication information, the access network device allocates multicast service transmission tunnel information to the first multicast service when context information of the first multicast service does not exist on the access network device, where the multicast service transmission tunnel information is used by a user plane network element to send data of the first multicast service to the access network device; stores the context information of the first multicast service, where the stored context information of the first multicast service includes the multicast service transmission tunnel information; and associates the terminal device with the context information of the first multicast service, that is, establishes a binding relationship between the terminal device and the context information of the first multicast service. That the access network device establishes a binding relationship between the terminal device and the context information of the first multicast service may specifically be: including information about the first multicast service in context information of the terminal device, or including information about the terminal device in the context information of the first multicast service. The information about the terminal device may include identification information of the terminal device and/or PDU session information (for example, a PDU session ID and a DNN) of the terminal device. In this way, when the binding relationship between the terminal device and the context information of the first multicast service is established, the access network device can receive the data of the first multicast service from the user plane network element based on the multicast service transmission tunnel information, and send the data of the first multicast service to the terminal device. Specifically, the access network device can send the first multicast service to the terminal device in a multicast mode, or send the first multicast service to the terminal device in a unicast mode.

In a possible implementation, after allocating the multicast service transmission tunnel information, the access network device may send the multicast service transmission tunnel information to the session management network element, so that the session management network element carries the multicast service transmission tunnel information in forwarding rule information of the first multicast service.

In a possible implementation, when the access network device receives the first multicast service indication information, the access network device associates the terminal device with context information of the first multicast service if the context information of the first multicast service exists on the access network device. In this way, the access network device can receive the data of the first multicast service from a user plane network element based on multicast service transmission tunnel information, and send the data of the first multicast service to the terminal device in the unicast mode or the multicast mode.

In a possible implementation, the multicast service information includes multicast service transmission tunnel information, and the multicast service transmission tunnel information is used by a user plane network element to send the data of the first multicast service to the access network device. The access network device adds the terminal device for transmission of the data of the first multicast service when receiving the multicast service transmission tunnel information, that is, includes information about the terminal device in context information of the first multicast service or includes information about the first multicast service in context information of the terminal device. Because the multicast service transmission tunnel information is received, it indicates that a transmission tunnel between the access network device and the user plane network element has been established. In this way, the access network device can directly receive the data of the first multicast service from the user plane network element based on the multicast service transmission tunnel information, and send the data of the first multicast service to the terminal device in the unicast mode or the multicast mode.

In a possible implementation, the user plane network element is a user plane network element corresponding to the PDU session of the terminal device.

In a possible implementation, the access network device receives, from the session management network element, a quality of service flow identifier and quality of service configuration information that correspond to the first multicast service; establishes a data radio bearer between the access network device and the terminal device based on the quality of service configuration information, where the data radio bearer is for transmitting the data of the first multicast service; and sends configuration information of the data radio bearer to the terminal device, so that the terminal device receives the data of the first multicast service from the access network device based on the configuration information using the data radio bearer.

In a possible implementation, the access network device sends first indication information to the session management network element based on the multicast service information, where the first indication information indicates whether the access network device has joined the transmission of the first multicast service.

The session management network element is a session management network element corresponding to the PDU session of the terminal device.

A third aspect of this application provides a multicast communication method. The method may be performed by an AF network element, or may be performed by a component (for example, a processor, a chip, or a chip system) in the AF network element. The method includes:

The AF network element sends first multicast service indication information to a session management network element, where the first multicast service indication information indicates a first multicast service, and the session management network element is a session management network element corresponding to a PDU session of a terminal device.

According to the third aspect of this application, the AF network element indicates the first multicast service to the session management network element, so that the session management network element sends multicast service information to an access network device that serves the terminal device, and the access network device establishes an association relationship between the terminal device and the first multicast service, to implement transmission of the first multicast service.

The AF may send the first multicast service indication information to the session management network element via a policy control network element or a network exposure function network element.

In a possible implementation, the AF network element receives user plane transmission information from the session management network element, may receive the user plane transmission information via the policy control network element or the network exposure function network element, and sends data of the first multicast service to a user plane network element based on the user plane transmission information, so that the AF network element sends the data of the first multicast service to the user plane network element.

In a possible implementation, the user plane network element may be a user plane network element corresponding to the PDU session of the terminal device.

In a possible implementation, the user plane transmission information may include one or more of the following: address information of the PDU session, address information corresponding to the user plane network element, or second indication information, where the second indication information is used by the AF network element to determine target address information of the data of the first multicast service.

A fourth aspect of this application provides a communication apparatus. The communication apparatus may be a session management network element, a component in the session management network element, or an apparatus that can be used together with the session management network element. In a design, the apparatus may include modules corresponding to the methods/operations/steps/actions described in the first aspect. The modules may be implemented using a hardware circuit, software, or a combination of the hardware circuit and the software. In a design, the apparatus may include a processing module and a transceiver module.

For example, the processing module uses the transceiver module to: receive first multicast service indication information from an AF network element, where the first multicast service indication information indicates a first multicast service; send, based on the first multicast service indication information, multicast service information to an access network device that serves a terminal device, where the multicast service information is used by the access network device to establish an association relationship between the terminal device and the first multicast service; and send forwarding rule information of the first multicast service to a user plane network element.

Afifth aspect of this application provides a communication apparatus. The apparatus includes a processor, configured to implement the method described in the first aspect. The apparatus may further include a memory, configured to store instructions and data. The memory is coupled to the processor. When the processor executes the instructions stored in the memory, the apparatus may be enabled to implement the method described in the first aspect. The apparatus may further include a communication interface. The communication interface is used by the apparatus to communicate with another device. For example, the communication interface may be a transceiver, a circuit, a bus, a module, or another type of communication interface. The another device may be a network device or the like. In a possible design, the apparatus includes:
a memory, configured to store program instructions; and
a processor, configured to control a communication interface to: receive first multicast service indication information from an AF network element, where the first multicast service indication information indicates a first multicast service; send, based on the first multicast service indication information, multicast service information to an access network device that serves a terminal device, where the multicast service information is used by the access network device to establish an association relationship between the terminal device and the first multicast service; and send forwarding rule information of the first multicast service to a user plane network element.

A sixth aspect of this application provides a computer-readable storage medium, including instructions. When the instructions are run on a computer, the computer is enabled to perform the method provided in the first aspect.

A seventh aspect of this application provides a chip system. The chip system includes a processor, may further include a memory, and is configured to implement the method provided in the first aspect. The chip system may include a chip, or may include a chip and another discrete component.

An eighth aspect of this application provides a communication apparatus. The communication apparatus may be an access network device, a component in the access network device, or an apparatus that can be used together with the access network device. In a design, the apparatus may include modules corresponding to the methods/operations/steps/actions described in the second aspect. The modules may be implemented using a hardware circuit, software, or a combination of the hardware circuit and the software. In a design, the apparatus may include a processing module and a transceiver module.

For example, the processing module uses the transceiver module to: receive a second message, where the second message includes multicast service information corresponding to a first multicast service; and establish an association relationship between a terminal device and the first multicast service based on the second message.

A ninth aspect of this application provides a communication apparatus. The apparatus includes a processor, configured to implement the method described in the second aspect. The apparatus may further include a memory, configured to store instructions and data. The memory is coupled to the processor. When the processor executes the instructions stored in the memory, the apparatus may be enabled to implement the method described in the second aspect. The apparatus may further include a communication interface. The communication interface is used by the apparatus to communicate with another device. For example, the communication interface may be a transceiver, a circuit, a bus, a module, or another type of communication interface. The another device may be a network device or the like. In a possible design, the apparatus includes:
a memory, configured to store program instructions; and
a processor, configured to: control a communication interface to receive a second message, where the second message includes multicast service information corresponding to a first multicast service; and establish an association relationship between a terminal device and the first multicast service based on the second message.

A tenth aspect of this application provides a computer-readable storage medium, including instructions. When the instructions are run on a computer, the computer is enabled to perform the method provided in the second aspect.

An eleventh aspect of this application provides a chip system. The chip system includes a processor, may further include a memory, and is configured to implement the method provided in the second aspect. The chip system may include a chip, or may include a chip and another discrete component.

A twelfth aspect of this application provides a communication apparatus. The communication apparatus may be an AF network element, a component in the AF network element, or an apparatus that can be used together with the AF network element. In a design, the apparatus may include modules corresponding to the methods/operations/steps/actions described in the third aspect. The modules may be implemented using a hardware circuit, software, or a combination of the hardware circuit and the software. In a design, the apparatus may include a processing module and a transceiver module.

For example, the processing module uses the transceiver module to send first multicast service indication information to a session management network element, where the first multicast service indication information indicates a first multicast service, and the session management network element is a session management network element corresponding to a PDU session of a terminal device.

A thirteenth aspect of this application provides a communication apparatus. The apparatus includes a processor, configured to implement the method described in the third aspect. The apparatus may further include a memory, configured to store instructions and data. The memory is coupled to the processor. When the processor executes the instructions stored in the memory, the apparatus may be enabled to implement the method described in the third aspect. The apparatus may further include a communication interface. The communication interface is used by the apparatus to communicate with another device. For example, the communication interface may be a transceiver, a circuit, a bus, a module, or another type of communication interface. The another device may be a network device or the like. In a possible design, the apparatus includes:
a memory, configured to store program instructions; and
a processor, configured to control a communication interface to send first multicast service indication information to a session management network element, where the first multicast service indication information indicates a first multicast service, and the session management network element is a session management network element corresponding to a PDU session of a terminal device.

A fourteenth aspect of this application provides a computer-readable storage medium, including instructions. When the instructions are run on a computer, the computer is enabled to perform the method provided in the third aspect.

A fifteenth aspect of this application provides a chip system. The chip system includes a processor, may further include a memory, and is configured to implement the method provided in the third aspect. The chip system may include a chip, or may include a chip and another discrete component.

A sixteenth aspect of this application provides a communication system. The communication system includes a session management network element configured to implement the method provided in the first aspect, an access network device configured to implement the method provided in the second aspect, and an AF network element configured to implement the method provided in the third aspect.

### BRIEF DESCRIPTION OF DRAWINGS

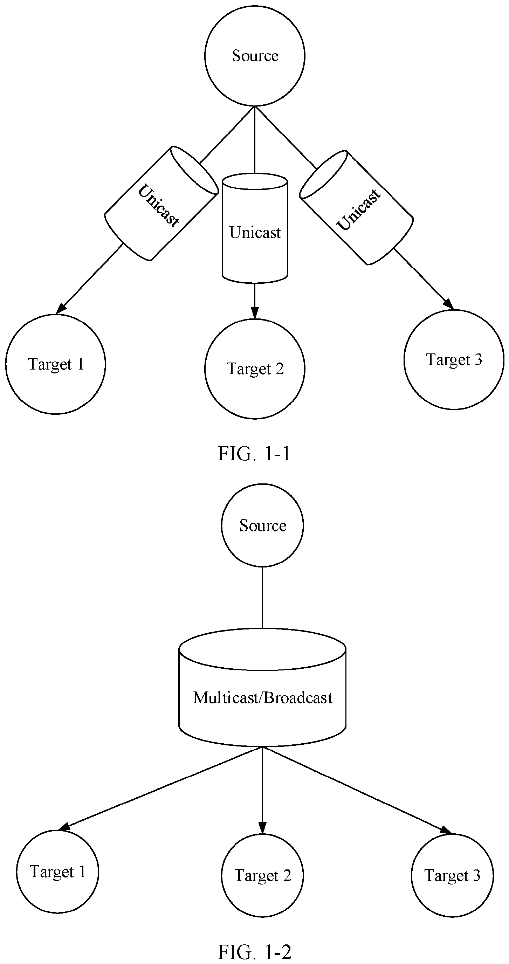

FIG. 1-1 is an example diagram of point-to-multipoint data transmission;
FIG. 1-2 is an example diagram of other point-to-multipoint data transmission;
FIG. 2 is an example diagram of implementing multicast/broadcast using an MBMS;
FIG. 3-1 is a schematic diagram of a 5G system architecture;
FIG. 3-2 is a schematic diagram of another 5G system architecture;
FIG. 4 is a schematic diagram of a network architecture for implementing a multicast mode;
FIG. 5 is a schematic diagram of a network architecture to which an embodiment of this application is applied;
FIG. 6 is a schematic flowchart of a multicast communication method according to Embodiment 1 of this application;
FIG. 7 is a schematic flowchart of a multicast communication method according to Embodiment 2 of this application;
FIG. 8 is a schematic flowchart of a multicast communication method according to Embodiment 3 of this application;
FIG. 9 is a schematic flowchart of a multicast communication method according to Embodiment 4 of this application;
FIG. 10 is a schematic flowchart of a multicast communication method according to Embodiment 5 of this application;
FIG. 11 is a schematic diagram of a structure of a communication apparatus according to an embodiment of this application; and
FIG. 12 is a schematic diagram of a structure of another communication apparatus according to an embodiment of this application.

### DESCRIPTION OF EMBODIMENTS

To better understand technical solutions provided in embodiments of this application, technical terms in embodiments of this application are first described.

### (1) Point-to-multipoint data transmission

In a 3GPP network, there is a requirement that a source (source) sends same data to a plurality of targets (targets), that is, the point-to-multipoint data transmission. The source is a transmit end or a sender. The target is a receive end or a receiver, and may be a terminal device or another device.

There are two modes for the point-to-multipoint data transmission.

Mode 1: The point-to-multipoint data transmission is implemented in a unicast mode. For example, refer to FIG. 1-1. A source establishes a unicast link to each of three targets (namely, a target 1 to a target 3). One unicast link implements data transmission between the source and one target. In this mode, the source sends a data packet to each receive end through each unicast link.

Mode 2: The point-to-multipoint data transmission is implemented in a multicast/broadcast mode. For example, refer to FIG. 1-2. A source establishes a transmission link to three targets (namely, a target 1 to a target 3). The source sends one copy of to-be-sent data, and a plurality of receive ends receive a same data packet.

Compared with Mode 1, Mode 2 can save more transmission resources, and can improve transmission efficiency. When no multicast or broadcast network element is configured on a network, the point-to-multipoint data transmission may be implemented in Mode 1.

### (2) Multimedia broadcast multicast service (Multimedia Broadcast Multicast Service, MBMS)

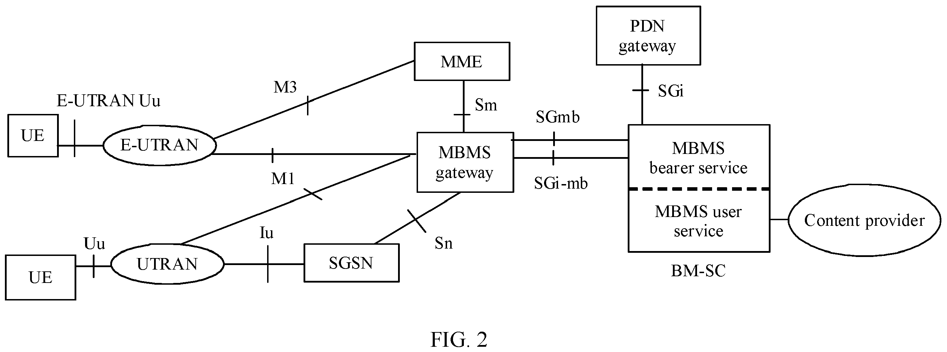

The MBMS supports provision of a multicast/broadcast network in a cellular system, so that both a multicast/broadcast service and a unicast service are provided in a single network. The MBMS is located in an evolved packet core (evolved packet core, EPC), and may be for implementing data transmission in a multicast/broadcast mode. For example, reference may be made to an example diagram of implementing multicast/broadcast using an MBMS shown in FIG. 2. In FIG. 2, UE may be connected to an EPC via a universal terrestrial radio access network (universal terrestrial radio access network, UTRAN), and the UTRAN may be connected to an MBMS gateway (gateway) via a serving GPRS support node (serving GPRS support node, SGSN); or UE may be connected to an EPC via an evolved universal terrestrial radio access network (evolved universal terrestrial radio access network, E-UTRAN), and the E-UTRAN may be connected to an MBMS gateway via a mobility management entity (mobility management entity, MME). The MBMS gateway may be connected to a BM-SC. The BM-SC may include an MBMS bearer service (bearer service) and an MBMS user service (user service). The MBMS user service may be connected to a content provider. The MBMS bearer service may be connected to a public data network (public data network, PDN) gateway.

AnAF may be equivalent to the source in FIG. 1-2. The BM-SC, the MBMS gateway, and the E-UTRAN may be equivalent to a control function network element, and are configured to implement the multicast/broadcast mode in FIG. 1-2. The UE may be equivalent to the target in FIG. 1-2, and represents a terminal device that receives data. Before receiving the data, the UE receives related information that is about how to receive multicast data and that is from the AF, for example, a frequency at which the multicast data is sent and a period of time for receiving the multicast data. The E-UTRAN represents a radio base station for transmitting data, and may receive a control message from a core network, join a multicast group, and allocate related identification information. The E-UTRAN may broadcast data based on the data of the core network through specific broadcast of an air interface. The BM-SC represents a network element responsible for session management and service management in an MBMS system, for example, responsible for establishing a multicast bearer, determining a transmission mode (a unicast/multicast transmission mode), and allocating information such as a multicast group identifier. The AF may also be referred to as an application server, and is an initiator of the multicast data. However, the AF may have some functions of the BM-SC in different transmission modes.

In a full service mode (full service mode), the AF serves as a service requirement provider, and does not care about service-level management such as a service transmission mode. The AF may notify the BM-SC of a period of time for sending data and an area in which the data is sent. Then, the AF transmits the data to the BM-SC within the period of time for sending data. The AF may notify, using an application layer, the UE of related information on an application (application) side, for example, information such as a service identifier (service ID) or a temporary mobile group identity (temporary mobile group identity, TMGI), so that the UE receives downlink MBMS data.

In a transport-only mode (transport-only mode), the core network serves as a data transmission channel, and the BM-SC is responsible for session-level management, that is, the BM-SC is responsible for how to establish the channel. Other functions, for example, group management and transmission mode management, of the BM-SC may be implemented on the AF. To implement some original functions of the BM-SC on the AF, the AF needs to obtain some information from the UE using the application layer. For example, the information may include one or more of location information of the UE, a type of a network accessed by the UE, a capability supported by the UE, and the like. Specific information obtained by the AF depends on implementation of the AF. However, the location information of the UE is indispensable.

### (3) 5G System Architecture

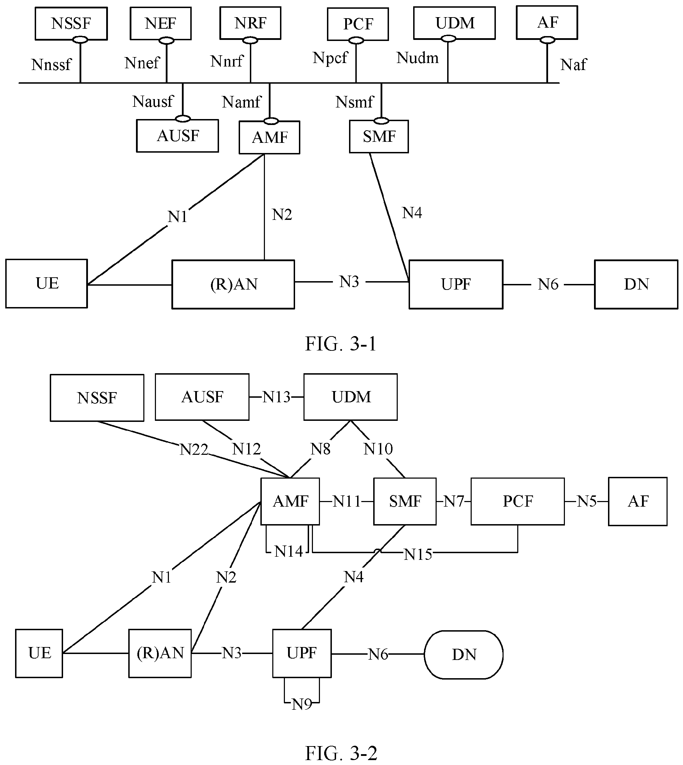

Refer to diagrams of 5G system architectures shown in FIG. 3-1 and FIG. 3-2. The two diagrams of the 5G system architectures each may be a diagram of a 5G non-roaming reference point-based architecture. The 5G system architecture includes a terminal device, an access network, and a core network.

The terminal device is a device having a wireless transceiver function, and may be deployed on land, including an indoor or outdoor device, a hand-held device, a wearable device, or a vehicle-mounted device, may be deployed on a water surface (for example, on a ship), or may be deployed in the air (for example, on a plane, a balloon, or a satellite). The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. The terminal device sometimes may also be referred to as a terminal, user equipment (user equipment, UE), an access terminal device, a vehicle-mounted terminal, an industrial control terminal, a UE unit, a UE station, a mobile station, a remote station, a remote terminal device, a mobile device, a UE agent, a UE apparatus, or the like. The terminal device may be fixed or mobile. In FIG. 3-1, FIG. 3-2, and embodiments of this application, an example in which the terminal device is the UE is used for description.

The access network is configured to implement an access-related function, may provide a network access function for an authorized user in a specific area, and can determine transmission tunnels of different quality based on a user level, a service requirement, and the like, to transmit user data. The access network forwards a control signal and the user data between the terminal device and the core network.

The access network may include an access network device. The access network device may be a device that provides access for the terminal device, and may include a radio access network (radio access network, RAN) device and an AN device. The RAN device is mainly a wireless network device in the 3GPP network. The AN device may be a non-3 GPP access network device. The RAN device is mainly responsible for functions such as radio resource management, quality of service (quality of service, QoS) management, and data compression and encryption on an air interface side. The RAN device may include base stations in various forms, for example, a macro base station, a micro base station (which may also be referred to as a small cell), a relay station, an access point, and a balloon station. In systems using different radio access technologies, a device having a function of the base station may have different names. For example, in a 5G system, the device is referred to as a RAN or a next generation base station (next generation Node base station, gNB); and in a long term evolution (long term evolution, LTE) system, the device is referred to as an evolved NodeB (evolved NodeB, eNB or eNodeB).

The core network is responsible for maintaining subscription data of a mobile network, and providing functions such as session management, mobility management, policy management, and security authentication for the UE. The core network may include the following network elements: a user plane function (user plane function, UPF), an authentication service function (authentication server function, AUSF), an access and mobility management function (access and mobility management function, AMF), a session management function (session management function, SMF), a network slice selection function (network slice selection function, NSSF), a network exposure function (network exposure function, NEF), a network function repository function (NF repository function, NRF), a policy control function (policy control function, PCF), unified data management (unified data management, UDM), and an application function (application function, AF).

The AMF is mainly responsible for the mobility management in the mobile network, for example, user location update, registration of a user with a network, and user switching. The SMF is mainly responsible for the session management in the mobile network, for example, session establishment, modification, and release. A specific function is, for example, allocating an internet protocol (internet protocol, IP) address to the user, or selecting the UPF that provides a packet forwarding function. The UPF is responsible for forwarding and receiving user data in the terminal device, and may receive the user data from a data network, and transmit the user data to the terminal device via the access network device, or may receive the user data from the terminal device via the access network device, and forward the user data to a data network. The PCF is mainly responsible for providing a unified policy framework to control network behavior, providing a policy rule for a control layer network function, and obtaining policy decision-related subscription information of a user. The PCF may provide policies such as a QoS policy and a slice selection policy for the AMF and the SMF. The AUSF is configured to perform UE security authentication. The NSSF is configured to select a network slice for the UE. The NEF is mainly configured to support capability and event exposure. The NRF is configured to provide functions of storing and selecting network functional entity information for another network element. The UDM is configured to store user data, for example, subscription data and authentication/authorization data. The AF mainly supports interacting with a 3GPP core network to provide a service, for example, a service that affects a data routing decision or a policy control function, or some third-party services provided for a network side.

The data network (data network, DN) is configured to provide a service for the user. The data network may be a private network, for example, a local area network. The data network may alternatively be an external network that is not controlled by a carrier, for example, Internet (Internet). The data network may alternatively be a dedicated network jointly deployed by carriers, for example, a network that provides an IP multimedia subsystem (IP multimedia subsystem, IMS). The terminal device may access the DN using an established protocol data unit (protocol data unit, PDU) session.

### (4) Separation of service management from session management

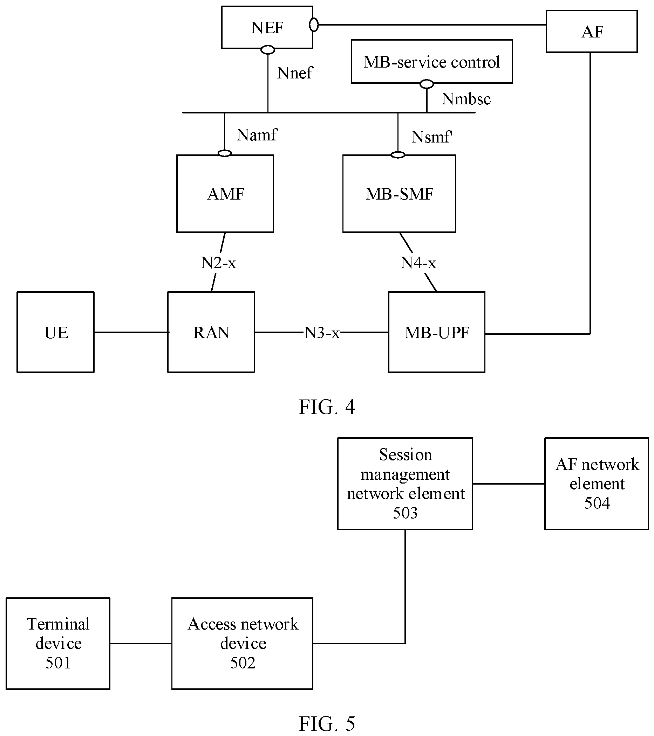

In the EPC, the BM-SC may include two functions: service management and session management. However, the service management function is actually not required for the transport-only mode. However, the carrier may purchase the BM-SC with the unnecessary service management function, resulting in high costs for deployment of a multicast function. In view of this, a diagram of a network architecture for implementing a multicast mode is provided, which is shown in FIG. 4. In FIG. 4, the service management function of the BM-SC is implemented through MB-service control (service control) in the proposed 5G architecture, and the function of the session management of the BM-SC is implemented using an enhanced SMF in the proposed 5G architecture. The enhanced SMF is an MB-SMF. In this way, when the carrier provides support only for the transport-only mode, the MB-SMF may be set, thereby greatly reducing deployment costs.

Based on the network architecture shown in FIG. 4, a multicast session establishment process may include: An AF provides a core network with group session information, for example, a service area, opening hours, a QoS requirement, address information of the AF, and the like. A NEF selects the MB-SMF based on the group session information provided by the AF. The MB-SMF sends the information including a TMGI, the service area, and the like to an associated base station via an AMF using an N2 SM message. After the base station returns a success message, the NEF sends an IP address and a port number of an MB-UPF (which is a user plane network element of a multicast session for receiving data of a data network, and sending the data to UE via the base station) to the AF.

It can be learned that a multicast transmission channel and a unicast transmission channel are independent of each other, and interruption may occur during handover between multicast and unicast. For example, when the UE receives the multicast data, handover to a unicast bearer is performed only when multicast receiving is poor to some extent, in which there is a delay.

In view of this, embodiments of this application provide a multicast communication method, which can support dynamic handover between unicast and multicast, so that more transmission resources are saved, and utilization of a network element can be improved as no new network element is introduced.

The following describes the technical solutions in embodiments of this application with reference to the accompanying drawings in embodiments of this application. Unless otherwise specified, "/" in the descriptions of embodiments of this application represents an "or" relationship between associated objects. For example, A/B may represent A or B. In addition, unless otherwise specified, "a plurality of" in the descriptions of this application means two or more than two. "One or more of the following items (pieces)" or a similar expression thereof means any combination of these items, including any combination of singular items (pieces) or plural items (pieces). For example, one or more of a, b, or c may represent a, b, c, a and b, a and c, b and c, or a, b and c, where a, b, and c may be singular or plural. In addition, to clearly describe the technical solutions in embodiments of this application, terms such as "first" and "second" are used in embodiments of this application to distinguish between technical features that have basically same or similar functions. A person skilled in the art may understand that the terms such as "first" and "second" do not limit a quantity or an execution sequence, and the terms such as "first" and "second" do not indicate a definite difference.

Technologies described in embodiments of this application may be applied to various communication systems, for example, a 4th generation (4th generation, 4G) communication system, a 4.5G communication system, a 5G communication system, a system integrating a plurality of communication systems, and a future evolved communication system. The communication systems include, for example, a long term evolution (long term evolution, LTE) system, a new radio (new radio, NR) system, a wireless fidelity (wireless fidelity, Wi-Fi) system, a communication system related to the 3rd generation partnership project (3rd generation partnership project, 3GPP), and another communication system of this type.

FIG. 5 is a schematic diagram of a network architecture to which an embodiment of this application is applied. The network architecture may include a terminal device 501, an access network device 502, a session management network element 503, and an AF network element 504.

For descriptions of the terminal device 501, refer to the specific descriptions of the terminal device in the foregoing 5G system architecture. In technical solutions provided in this embodiment of this application, an example in which an apparatus configured to implement a function of the terminal device is UE is used. For descriptions of the access network device 502, refer to the specific descriptions of the access network device in the foregoing 5G system architecture. In the technical solutions provided in this embodiment of this application, an example in which an apparatus configured to implement a function of the access network device is a RAN is used. For descriptions of the AF network element 504, refer to the specific descriptions of the AF in the foregoing 5G system architecture.

The session management network element 503 may be an SMF in a 5G system, or may be a network element configured to implement a function of an SMF in a future communication system. In the technical solutions provided in this embodiment of this application, an example in which an apparatus configured to implement a function of the session management network element 503 is the SMF is used.

In this embodiment of this application, the AF network element 504 may learn of whether the terminal device 501 joins a multicast service, and send multicast service indication information to the session management network element 503 when the terminal device 501 joins the multicast service. The multicast service indication information indicates a specific multicast service which the terminal device 501 joins. It is assumed that the specific multicast service is a multicast service 1. The AF network element 504 may send the multicast service indication information to the session management network element 503 via a NEF and a policy control network element. The policy control network element may be a PCF in a 5G system, or may be a network element configured to implement a function of a PCF in a future communication system. Alternatively, the AF network element 504 sends the multicast service indication information to the session management network element 503 via a policy control network element. The policy control network element may be a PCF in a 5G system, or may be a network element configured to implement a function of a PCF in a future communication system. The session management network element 503 may be a session management network element corresponding to a PDU session of the terminal device 501. The policy control network element may be a policy control network element corresponding to the PDU session of the terminal device 501.

When receiving the multicast service indication information from the AF network element, the session management network element 503 may send multicast service information to the access network device 502. The multicast service information is used by the access network device 502 to establish an association relationship between the terminal device 501 and the multicast service 1, so that the access network device 502 can send, using the PDU session, the data of the multicast service 1 to the terminal device 501 when receiving data of the multicast service 1. The access network device 502 may be an access network device corresponding to the PDU session of the terminal device 501. The session management network element 503 may further send forwarding rule information of the multicast service 1 to a user plane network element, so that the user plane network element sends a forwarding rule of the multicast service 1 to the access network device 502 based on the forwarding rule information. The user plane network element is a user plane network element corresponding to the PDU session of the terminal device 501. The user plane network element may be a UPF in a 5G system, or may be a network element configured to implement a function of a UPF in a future communication system.

In the network architecture shown in FIG. 5, the network elements related to the PDU session of the terminal device perform transmission of the data of the multicast service without adding another network element to a 5G system architecture. This can improve utilization of a network element and save transmission resources.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

The following describes the multicast communication method provided in embodiments of this application with reference to the accompanying drawings. It should be noted that, in the descriptions, names of information or data exchanged between network elements are used as examples, and do not constitute a limitation on embodiments of this application.

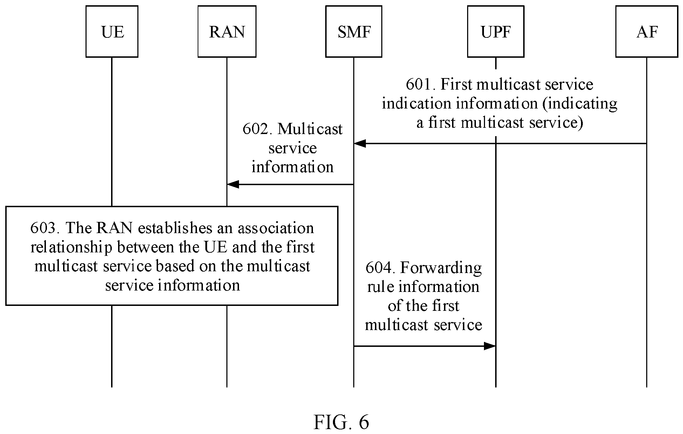

FIG. 6 is a schematic flowchart of a multicast communication method according to Embodiment 1 of this application. The procedure may include but is not limited to the following steps.

Step 601. An AF sends first multicast service indication information to an SMF. Correspondingly, the SMF receives the first multicast service indication information from the AF.

A prerequisite for implementing this embodiment of this application is that UE has established a PDU session with a 5G core network. The PDU session may be understood as a unicast transmission channel between the UE and the 5G core network, which may be specifically a unicast transmission channel between the UE, a RAN, and a UPF.

When the UE has established the PDU session, the AF may learn whether the UE joins a multicast service. For example, the AF may determine, based on an identifier of the UE, whether the UE joins the multicast service. If a UE set corresponding to the multicast service includes the identifier of the UE, the AF may learn that the UE joins the multicast service. The multicast service may be, for example, a multicast service of an internet protocol television (Internet protocol television, IPTV) channel. If the identifier of the UE is included in a multicast service of a channel, it may be learned that the UE joins the multicast service of the channel. For another example, the AF may determine, based on IP address information of the PDU session of the UE, whether the UE joins a multicast service. If an address pool corresponding to a multicast service includes the IP address information, the AF may learn that the UE joins the multicast service. In a process in which the UE establishes the PDU session, the AF may learn of the IP address information of the PDU session of the UE. The IP address information includes an IP address, and optionally, further includes a port number. For example, the AF determines, based on a multicast joining message sent by the UE, that the UE joins a specified multicast service. Alternatively, after receiving a message sent by the UE, the AF determines that a service to be obtained by the UE is a multicast service or that services received by a plurality of UEs are the same.

When learning that the UE joins a first multicast service, the AF sends the first multicast service indication information to the SMF based on information about the UE (for example, address information of the UE). The first multicast service indication information indicates the first multicast service. The first multicast service may be a multicast service to be received by the UE, a multicast service of any channel, or a same service received by a plurality of UEs. The first multicast service indication information may be an IP multicast address of the first multicast service, a multicast group identifier (group ID) of the first multicast service, or other information identifying the first multicast service.

The SMF may determine, in the following two manners, the RAN that serves the UE. The RAN that serves the UE may include a RAN corresponding to the PDU session of the UE. The RAN that serves the UE may alternatively be described as a RAN accessed by the UE.

Implementation 1: In the process in which the UE establishes the PDU session, the SMF may obtain an identifier of the RAN from an AMF. For example, the AMF sends, to the SMF, a PDU session establishment request message carrying the identifier of the RAN, and the SMF may obtain the identifier of the RAN when receiving the PDU session establishment request message. The identifier of the RAN identifies the RAN corresponding to the PDU session, and may be a device name or a device identifier of the RAN, another ID uniquely identifying the RAN, or the like.

Implementation 2: The AF sends a first service request message to a NEF. The first service request message includes the first multicast service indication information, an AF ID, UE IP address information, and service information. The AF ID identifies the AF. The UE IP address information is the IP address information of the PDU session of the UE. The service information is service information of the first multicast service, and may include requirement information of a service. In the case of receiving the first service request message, that the NEF selects a PCF based on the UE IP address information may be understood as that the NEF selects a PCF corresponding to the PDU session of the UE, or that the NEF selects a PCF that serves the PDU session of the UE. The NEF sends a second service request message to the selected PCF. The second service request message includes the first multicast service indication information, the AF ID, the UE IP address information, and service control information that is determined based on the service information. How to control a service is determined based on the service control information determined based on the service information, for example, the requirement information (that is, quality of service requirement information of the service) of the service. The service control information may include quality of service information (for example, a quality of service (quality of service, QoS) parameter such as a 5G quality of service indicator (5G quality of service indicator, 5QI), a maximum bit rate (maximum bit rate, MBR), or a guaranteed bit rate (guaranteed bit rate, GBR)) of the service. In a case of receiving the second service request message, the PCF performs an authorization check on the first multicast service, and sends an SM policy update request message to the SMF when the check succeeds. The SM policy update request message includes the first multicast service indication information. The SM policy update request message may further include authorized QoS information and service data flow information. The authorized QoS information may also be described as quality of service (QoS) control information. The service data flow information may be service description information, for example, an application identifier and service filter information (for example, address information and protocol information that correspond to an application). The SM policy update request message may further include information for determining the RAN that serves the UE. The message may include the UE IP address information. The SMF may determine, based on the UE IP address information, the RAN that serves the UE. Alternatively, the message includes an SM policy association identifier. The SMF determines, based on the SM policy association identifier, the RAN that serves the PDU session of the UE.

Correspondingly, the SMF may send an SM policy update response message to the PCF in response to the SM policy update request message; the PCF may send a second service response message to the NEF in response to the second service request message; and the NEF may send a first service response message to the AF in response to the first service request message. An occasion on which the SMF sends the policy update response message to the PCF is not limited in this embodiment of this application.

Before sending the SM policy update response message to the PCF, the SMF may determine user plane transmission information. The user plane transmission information is used by the AF to send data of the first multicast service to a UPF. The SM policy update response may include the user plane transmission information, and the second service response message and the first service response message may include the user plane transmission information, so that the AF can learn of the user plane transmission information, and send the data of the first multicast service to the UPF based on the user plane transmission information. The UPF is a UPF corresponding to the PDU session of the UE, or a UPF that is selected by the SMF and that is for transmitting the first multicast service for a user.

In a possible implementation, when the SMF determines that the UPF needs to join transmission of the first multicast service, the SMF determines the user plane transmission information, and sends the user plane transmission information to the AF via the PCF and/or the NEF.

In a possible implementation, when information about a transmission tunnel that is between the AF and the UPF and that corresponds to the first multicast service does not exist on the SMF, context information of the first multicast service does not exist on the SMF, or the SMF determines that a transmission tunnel between the AF and the UPF needs to be established, the SMF determines the user plane transmission information, and sends the user plane transmission information to the AF via the PCF and/or the NEF. When the information about the transmission tunnel that is between the AF and the UPF and that corresponds to the first multicast service exists on the SMF, the SMF does not need to send the user plane transmission information to the AF.

The user plane transmission information may include one or more of the following:
(1) Address information of the PDU session: address information of the PDU session of the UE, that is, IP address information of the UE, where the address information of the PDU session may include the IP address/an IP prefix (prefix), and optionally, further includes a port number. Alternatively, when the SMF determines to use the address information of the PDU session as the user plane transmission information, the SMF may send indication information to the AF. The indication information indicates the AF to transmit the data of the first multicast service based on the address information of the PDU session of the UE.
(2) Address information corresponding to the UPF: address information corresponding to a UPF corresponding to the PDU session of the UE, or address information corresponding to a UPF that is selected by the SMF and that is for transmitting the first multicast service. The UPF corresponding to the PDU session of the UE is used as an example. The SMF determines an IP address/IP prefix based on an IP address pool corresponding to the UPF corresponding to the PDU session, and uses the IP address/IP prefix as the user plane transmission information. Optionally, the SMF further allocates a port number, and the user plane transmission information further includes the port number. Alternatively, the SMF requests an IP address/IP prefix from the UPF corresponding to the PDU session, optionally, further requests a port number, and uses content fed back by the UPF as the user plane transmission information.
(3) Indication information: which is used by the AF to determine target address information of the data of the first multicast service. To be specific, the indication information requests the AF to determine address information for receiving the data of the first multicast service, that is, requests the AF to determine address information of a UPF, where the UPF is for receiving the data of the first multicast service.

Step 602. The SMF sends multicast service information to the RAN based on the first multicast service indication information. Correspondingly, the RAN receives the multicast service information from the SMF.

In an implementation, the SMF may send the multicast service information to the RAN via the AMF. For example, the SMF sends an Namf_communication_N1N2messageTransfer request message to the AMF. The Namf_communication_N1N2messageTransfer request message includes an N2 SM container, and the N2 SM container includes the multicast service information, quality of service configuration information and a quality of service flow identifier (QoS flow ID, QFI) that correspond to the first multicast service. The quality of service configuration information may also be described as a QoS profile. A QoS flow identified by the QFI is for transmitting the data of the first multicast service. The SMF may determine, based on QoS control information sent by the PCF, the QoS profile and the QFI that correspond to the first multicast service. For a multicast service, the SMF allocates a new QFI, and determines the QoS profile based on the QoS control information. When receiving the Namf_communication_N1N2messageTransfer request message, the AMF may send an Namf_communication_N1N2messageTransfer response message to the SMF, and may further send an N2 request message to the RAN. The N2 request message includes the N2 SM container. The AMF between the SMF and the RAN is omitted in FIG. 6.

In an implementation, the SMF sends a PDU session management message to the AMF, and the AMF sends the PDU session management message to the RAN. The PDU session management message may be, for example, a PDU session modification message, and may include the multicast service information.

The multicast service information includes the first multicast service indication information and/or multicast service transmission tunnel information. The multicast service transmission tunnel information is used by the UPF to send the data of the first multicast service to the RAN.

When the context information of the first multicast service does not exist on the SMF, the multicast service information includes the first multicast service indication information, so that the RAN allocates downlink multicast service transmission tunnel information. The multicast service transmission tunnel information may include an IP address and a tunnel identifier (for example, a tunnel endpoint identifier (tunnel endpoint identifier, TEID)). The multicast service transmission tunnel information is used by the UPF to send downlink data to the RAN, and may be specifically used by the UPF to transmit the data of the first multicast service to the RAN. When the context information of the first multicast service exists on the SMF, the multicast service information includes the multicast service transmission tunnel information, so that the RAN can directly receive the data of the first multicast service from the UPF based on the multicast service transmission tunnel information. Alternatively, when the context information of the first multicast service exists on the SMF, the multicast service information includes the first multicast service indication information and the multicast service transmission tunnel information. Alternatively, the multicast service information includes index information. The index information identifies the context information of the first multicast service.

The context information of the first multicast service may include context information of the first multicast service transmitted by the RAN. The RAN is the RAN that serves the UE. The context information of the first multicast service transmitted by the RAN may include information about a transmission tunnel between the RAN and the UPF for transmission of the first multicast service.

Step 603. The RAN establishes an association relationship between the UE and the first multicast service based on the multicast service information.

When receiving the multicast service information, the RAN establishes the association relationship between the UE and the first multicast service based on the multicast service information.

In the case in which the multicast service information includes the first multicast service indication information,
when the context information of the first multicast service does not exist on the RAN, that is, the information about the transmission tunnel that is between the UPF and the RAN and that corresponds to the first multicast service does not exist on the RAN, the RAN allocates the multicast service transmission tunnel information to the first multicast service. The multicast service transmission tunnel information is used by the UPF to send the data of the first multicast service to the RAN. The multicast service transmission tunnel information allocated by the RAN may be tunnel information corresponding to the PDU session, and optionally, further includes the QFI; or may be tunnel information allocated by the RAN to an established multicast shared tunnel.

After allocating the multicast service transmission tunnel information, the RAN stores the context information of the first multicast service. The stored context information of the first multicast service includes the multicast service transmission tunnel information, that is, the information about the tunnel that is between the UPF and the RAN and that is for transmitting the first multicast service.

In an implementation, the RAN associates the UE with the context information of the first multicast service. This may specifically be: The RAN includes information about the first multicast service in context information of the UE; the RAN includes information about the UE in the context information of the first multicast service; or the RAN includes information about the first multicast service in a PDU session context of context information of the UE. The information about the UE may include PDU session information (for example, a PDU session ID and a DNN) of the UE and/or identification information of the UE. The identification information of the UE may be, optionally, address information of the UE, for example, an IP address of the UE. The information about the first multicast service may be identification information of the first multicast service and/or the service information of the first multicast service. The identification information of the first multicast service may be, for example, a multicast channel number.

In an implementation, the RAN associates the PDU session of the UE with the context information of the first multicast service, that is, associates the PDU session of the UE with the multicast service transmission tunnel information. For example, the PDU session information of the UE and the context information of the first multicast service are stored in an associated manner. The PDU session information of the UE is stored in the context information of the first multicast service, or the information about the first multicast service is stored in the PDU session context of the context information of the UE.

Further, the RAN establishes a data radio bearer (data radio bearer, DRB) between the RAN and the UE based on the QoS profile corresponding to the first multicast service, and sends configuration information of the DRB to the UE. The DRB is a DRB of the PDU session of the UE. The DRB is associated with the QoS profile corresponding to the first multicast service. In other words, the DRB is for bearing transmission of the data of the first multicast service. The UE receives the data of the first multicast service using the DRB. In this way, the RAN can determine, based on information such as a location and signal quality of the UE, whether to perform data transmission through a multicast transmission channel or a unicast transmission channel. Therefore, dynamic handover between unicast and multicast can be supported, and the RAN can sense a binding relationship between the multicast transmission channel and the PDU session of the UE.

Optionally, when allocating the multicast service transmission tunnel information, the RAN may send the multicast service transmission tunnel information to the SMF, so that the SMF sends forwarding rule information of the first multicast service to the UPF. The forwarding rule information includes the multicast service transmission tunnel information, so that the UPF sends the data of the first multicast service to the RAN through the multicast transmission tunnel. The RAN may send the multicast service transmission tunnel information to the SMF via the AMF. For example, the RAN sends an N2 response message to the AMF. The N2 response message includes an N2 SM container, and the N2 SM container includes the multicast service transmission tunnel information. The AMF sends an Nsmf_PDUSession_UpdateSMcontext message to the SMF. The Nsmf_PDUSession_UpdateSMcontext message includes the N2 SM container.

When the context information of the first multicast service exists on the RAN, the RAN associates the PDU session of the UE with the context information of the first multicast service, that is, associates the PDU session of the UE with the multicast service transmission tunnel information. Alternatively, the RAN associates the UE with the context information of the first multicast service, that is, includes the information about the UE in the context information of the first multicast service. Further, the RAN establishes a DRB between the RAN and the UE based on the QoS profile corresponding to the first multicast service, and sends configuration information of the DRB to the UE. The DRB is a DRB of the PDU session of the UE. The DRB is associated with the QoS profile corresponding to the first multicast service. In other words, the DRB is forbearing transmission of the data of the first multicast service. Further, optionally, when the RAN has joined in receiving the first multicast service, the RAN sends indication information to the SMF, to indicate the SMF that the RAN has joined in receiving the first multicast service.

When the context information of the first multicast service does not exist on the RAN, the RAN creates the context information of the first multicast service, and associates the UE with the context information of the first multicast service, for example, includes the information about the UE or the PDU session information of the UE in the context information of the first multicast service.

It may be understood that that the RAN associates the PDU session of the UE with the multicast service transmission tunnel information is that the RAN adds the UE for the transmission of the data of the first multicast service.

In the case in which the multicast service information includes the multicast service transmission tunnel information, the RAN adds the UE for the transmission of the data of the first multicast service. It may be understood that, when receiving the multicast service transmission tunnel information, the RAN directly adds the UE for the transmission of the data of the first multicast service. The UE is added for the transmission of the data of the first multicast service. To be specific, the information about the UE is included in the context information of the first multicast service, or the information about the first multicast service is included in the context information of the UE.

Step 604. The SMF sends the forwarding rule information of the first multicast service to the UPF. Correspondingly, the UPF receives the forwarding rule information of the first multicast service from the SMF.

The forwarding rule information of the first multicast service is used by the UPF to identify that a service received from the AF is the first multicast service, and transmit the data of the first multicast service through the transmission tunnel corresponding to the first multicast service.

In an implementation, when receiving first indication information from the RAN, the SMF sends the forwarding rule information of the first multicast service to the UPF based on the first indication information. The first indication information indicates whether the RAN has joined the transmission of the first multicast service. When the first indication information indicates that the RAN has not joined the transmission of the first multicast service, the forwarding rule information of the first multicast service is sent to the UPF. When the first indication information indicates that the RAN has joined the transmission of the first multicast service, the forwarding rule information of the first multicast service does not need to be sent to the UPF.

Optionally, the forwarding rule information of the first multicast service includes the multicast service transmission tunnel information and the QFI corresponding to the first multicast service.

The SMF may send the forwarding rule information of the first multicast service to the UPF using an N4 PDU session establishment request message.

In the embodiment shown in FIG. 6, the SMF sends the multicast service information to the RAN based on the first multicast service indication information obtained from the AF. The RAN may bind the PDU session of the UE or the UE with the transmission of the first multicast service using the multicast service information, to transmit the first multicast service between the RAN and the UE. The first multicast service is transmitted between the UPF and the RAN using the multicast service transmission tunnel information. The SMF sends the user plane transmission information to the AF, to transmit the first multicast service between the AF and the UPF. The PDU session is associated with the transmission of the first multicast service without adding another network element, so that utilization of a network element can be improved.

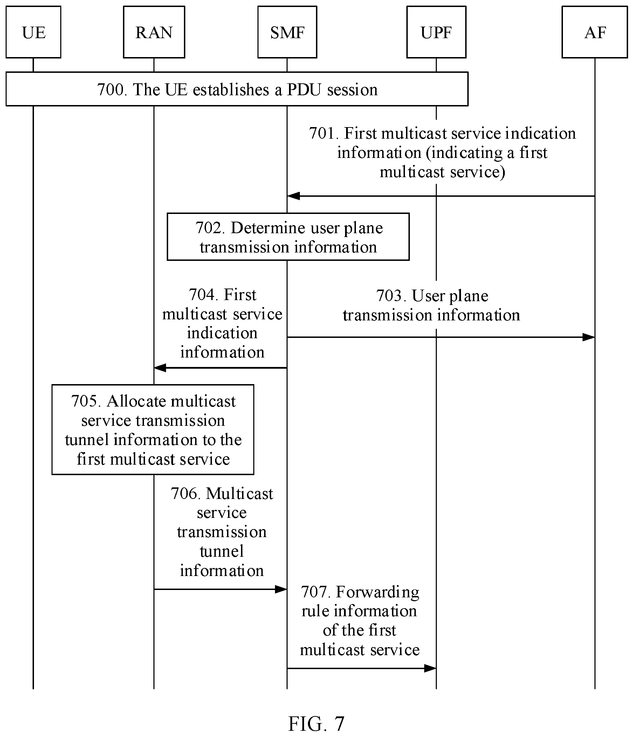

FIG. 7 is a schematic flowchart of a multicast communication method according to Embodiment 2 of this application. The procedure may include but is not limited to the following steps.

Step 700. UE establishes a PDU session.

The UE establishes the PDU session with the UPF. In the process of establishing the PDU session, optionally, an SMF may obtain an identifier of a RAN from an AMF.

Step 701. An AF sends first multicast service indication information to the SMF. Correspondingly, the SMF receives the first multicast service indication information from the AF.

For an implementation process of step 701, refer to the specific descriptions of step 601 in the embodiment shown in FIG. 6. Details are not described herein again.

Step 702. The SMF determines user plane transmission information.

Step 703. The SMF sends the user plane transmission information to the AF. Correspondingly, the AF receives the user plane transmission information from the SMF.

In a possible implementation, when the SMF determines that a UPF needs to join transmission of a first multicast service, the SMF determines the user plane transmission information, and sends the user plane transmission information to the AF via a PCF and a NEF.

For the user plane transmission information, refer to the descriptions of the user plane transmission information in the embodiment shown in FIG. 6. Details are not described herein again.

Step 704. The SMF sends first multicast service indication information to the RAN. Correspondingly, the RAN receives the first multicast service indication information from the SMF.

The SMF further sends, to the RAN, a QFI and a QoS profile that correspond to the first multicast service. The QFI and the QoS profile may be sent together with or separately from the first multicast service indication information.

Step 705. The RAN allocates multicast service transmission tunnel information to the first multicast service.

When receiving the first multicast service indication information, the RAN checks whether context information of the first multicast service exists. If the context information of the first multicast service does not exist, the RAN allocates the multicast service transmission tunnel information to the first multicast service.

The multicast service transmission tunnel information is used by the UPF to send data of the first multicast service to the RAN. The multicast service transmission tunnel information allocated by the RAN may be tunnel information corresponding to the PDU session and the QFI; or may be tunnel information allocated by the RAN to an established multicast shared tunnel.

After allocating the multicast service transmission tunnel information, the RAN stores the context information of the first multicast service, so that a multicast service transmission tunnel can be directly used next time with no need to be allocated again. The RAN associates the UE with the context information of the first multicast service, that is, associates the PDU session of the UE with the multicast service transmission tunnel information. This may specifically be: The RAN includes information about the first multicast service in context information of the UE; the RAN includes information about the UE in the context information of the first multicast service; or the RAN includes information about the first multicast service in a PDU session context of context information of the UE.

Further, the RAN establishes a DRB between the RAN and the UE based on the QoS profile corresponding to the first multicast service, and sends configuration information of the DRB to the UE. The DRB is a DRB of the PDU session of the UE. The DRB is associated with the QoS profile corresponding to the first multicast service. In other words, the DRB is for bearing transmission of the data of the first multicast service. The UE receives the data of the first multicast service using the DRB. In this way, the RAN can determine, based on information such as a location and signal quality of the UE, whether to perform data transmission through a multicast transmission channel or a unicast transmission channel. Therefore, dynamic handover between unicast and multicast can be supported, and the RAN can sense a binding relationship between the multicast transmission channel and the PDU session of the UE.

Step 706. The RAN sends the multicast service transmission tunnel information to the SMF. Correspondingly, the SMF receives the multicast service transmission tunnel information from the RAN.

Step 707. The SMF sends forwarding rule information of the first multicast service to the UPF. Correspondingly, the UPF receives the forwarding rule information of the first multicast service from the SMF.

The forwarding rule information of the first multicast service includes the QFI corresponding to the first multicast service and the multicast service transmission tunnel information. The forwarding rule information of the first multicast service is used by the UPF to identify that a service received from the AF is the first multicast service, and transmit the data of the first multicast service through a transmission tunnel corresponding to the first multicast service.

In the embodiment shown in FIG. 7, the SMF sends the first multicast service indication information to the RAN based on the first multicast service indication information obtained from the AF. The RAN allocates the multicast service transmission tunnel information to the first multicast service, and binds the UE with the transmission of the first multicast service, to transmit the first multicast service between the RAN and the UE. The first multicast service is transmitted between the UPF and the RAN using the multicast service transmission tunnel information. The SMF sends the user plane transmission information to the AF, to transmit the first multicast service between the AF and the UPF. The PDU session is associated with the transmission of the first multicast service without adding another network element, so that utilization of a network element can be improved.

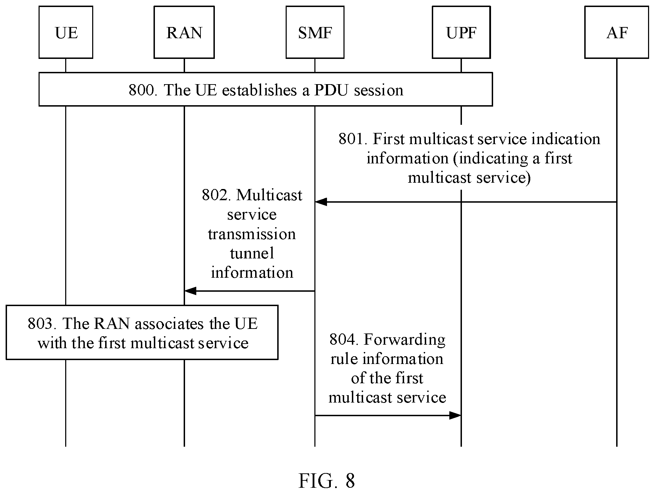

FIG. 8 is a schematic flowchart of a multicast communication method according to Embodiment 3 of this application. The procedure may include but is not limited to the following steps.

Step 800. UE establishes a PDU session.

Step 801. An AF sends first multicast service indication information to an SMF. Correspondingly, the SMF receives the first multicast service indication information from the AF.

Step 802. The SMF sends multicast service transmission tunnel information to a RAN. Correspondingly, the RAN receives the multicast service transmission tunnel information from the SMF.

When context information of the first multicast service exists on the SMF, the SMF sends the multicast service transmission tunnel information to the RAN. Optionally, the SMF further sends, to the RAN, a QFI and a QoS profile that correspond to a first multicast service. The QFI and the QoS profile may be sent together with or separately from the multicast service transmission tunnel information.

Step 803. The RAN associates the UE with the first multicast service.

The RAN associates the UE with the context information of the first multicast service when the RAN has established the context information of the first multicast service. This may specifically be: The RAN includes information about the first multicast service in context information of the UE; the RAN includes information about the UE in the context information of the first multicast service; or the RAN includes information about the first multicast service in a PDU session context of context information of the UE.

Further, the RAN establishes a DRB between the RAN and the UE based on the QoS profile corresponding to the first multicast service, and sends configuration information of the DRB to the UE. The DRB is a DRB of the PDU session of the UE. The DRB is associated with the QoS profile corresponding to the first multicast service. In other words, the DRB is for bearing transmission of data of the first multicast service. The UE receives the data of the first multicast service using the DRB. In this way, the RAN can determine, based on information such as a location and signal quality of the UE, whether to perform data transmission through a multicast transmission channel or a unicast transmission channel. Therefore, dynamic handover between unicast and multicast can be supported, and the RAN can sense a binding relationship between the multicast transmission channel and the PDU session of the UE.

Step 804. The SMF sends forwarding rule information of the first multicast service to the UPF. Correspondingly, the UPF receives the forwarding rule information of the first multicast service from the SMF.

The forwarding rule information of the first multicast service includes the QFI corresponding to the first multicast service and the multicast service transmission tunnel information. Further, the forwarding rule information of the first multicast service further includes a forwarding action rule (forwarding action rule, FAR), for indicating the UPF to discard the data that is of the first multicast service and that is transmitted using address information of the PDU session of the UE.

In the embodiment shown in FIG. 8, if the context information of the first multicast service exists on the SMF, the SMF directly sends the multicast service transmission tunnel information to the RAN. If the context information of the first multicast service exists on the RAN, the RAN directly associates the UE with the first multicast service without adding another network element, so that utilization of a network element can be improved.

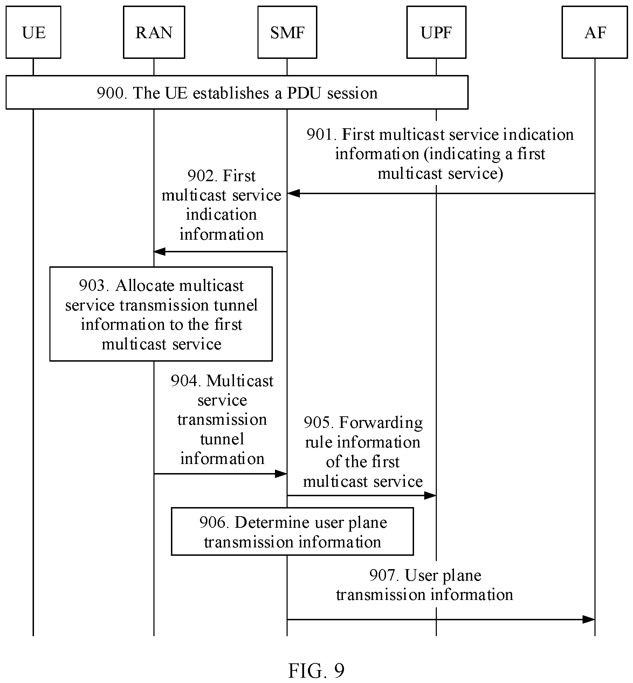

FIG. 9 is a schematic flowchart of a multicast communication method according to Embodiment 4 of this application. The procedure may include but is not limited to the following steps.

Step 900. UE establishes a PDU session.

Step 901. An AF sends first multicast service indication information to an SMF. Correspondingly, the SMF receives the first multicast service indication information from the AF.

Step 902. The SMF sends the first multicast service indication information to a RAN. Correspondingly, the RAN receives the first multicast service indication information from the SMF.

Step 903. The RAN allocates multicast service transmission tunnel information to a first multicast service.

Step 904. The RAN sends the multicast service transmission tunnel information to the SMF. Correspondingly, the SMF receives the multicast service transmission tunnel information from the RAN.

Step 905. The SMF sends forwarding rule information of the first multicast service to a UPF. Correspondingly, the UPF receives the forwarding rule information of the first multicast service from the SMF.

For implementation processes of step 902 to step 905, refer to the specific descriptions of step 704 to step 707 in the embodiment shown in FIG. 7. Details are not described herein again.

Step 906. The SMF determines user plane transmission information.

When receiving the multicast service transmission tunnel information from the RAN, the SMF determines the user plane transmission information.

Step 907. The SMF sends the user plane transmission information to the AF. Correspondingly, the AF receives the user plane transmission information from the AMF

A difference between the embodiment shown in FIG. 9 and the embodiment shown in FIG. 7 lies in that an occasion on which the SMF determines the user plane transmission information is different. For an effect of the embodiment shown in FIG. 9, refer to the effect of the embodiment shown in FIG. 7.

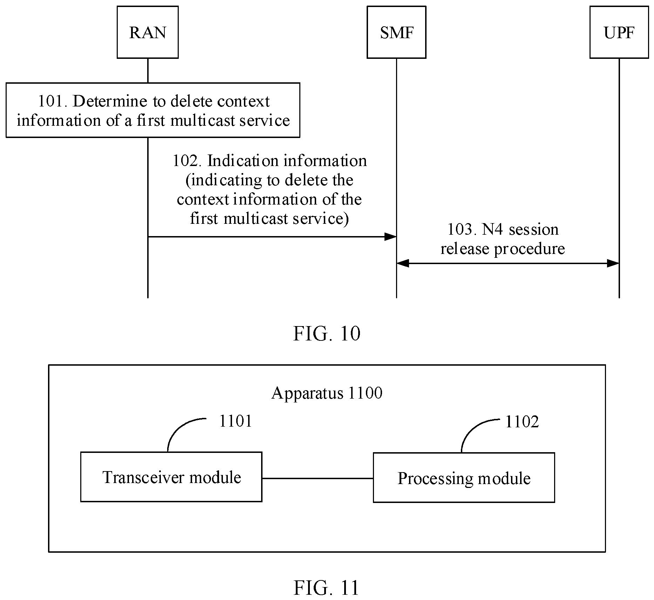

FIG. 10 is a schematic flowchart of a multicast communication method according to Embodiment 5 of this application. The procedure may include but is not limited to the following steps.

Step 101. A RAN determines to delete context information of a first multicast service.

Step 102. The RAN sends indication information to an SMF. Correspondingly, the SMF receives the indication information from the RAN.

The indication information indicates the SMF to delete the context information of the first multicast service.

The RAN may send the indication information to the SMF via an AMF. For example, the RAN sends an N2 request message to the AMF. The N2 request message includes the indication information. The AMF sends an Nsmf_MBS_SMContext message to the SMF. The Nsmf_MBS_SMContext message includes the indication information.

When receiving the indication information, the SMF deletes the context information of the first multicast service, and initiates an N4 session release procedure to a UPF.

Step 103. Perform N4 session release procedure.

The SMF and the UPF perform the N4 session release procedure.

After an N4 session is released, the SMF may send an Nsmf_MBS_SMContext response message to the AMF, and the AMF may send an N2 response message to the RAN. The Nsmf_MBS_SMContext response message and the N2 response message may indicate that the context information of the first multicast service has been deleted.

In the embodiment shown in FIG. 10, the RAN determines to delete the context information of the first multicast service and delete a tunnel between the RAN and the UPF for transmission of data of a first multicast service. However, a PDU session still exists, so that multicast service management can be independent of the PDU session.

In the foregoing embodiments provided in this application, the methods provided in embodiments of this application are separately described from a perspective of the core network element, the terminal device, and interaction between the core network element and the terminal device. To implement the functions in the foregoing methods provided in embodiments of this application, the core network element and the terminal device may include a hardware structure and/or a software module, and implement the foregoing functions in a form of the hardware structure, the software module, or a combination of the hardware structure and the software module. Whether a function in the foregoing functions is performed using the hardware structure, the software module, or the combination of the hardware structure and the software module depends on particular applications and design constraints of the technical solutions.

FIG. 11 is a schematic diagram of a structure of a communication apparatus according to an embodiment of this application. The communication apparatus 1100 shown in FIG. 11 may include a transceiver module 1101 and a processing module 1102.

In a design, the communication apparatus 1100 is configured to perform the methods performed by the SMF in the method embodiments shown in FIG. 6 to FIG. 10. For related features, refer to the foregoing method embodiments. Details are not described herein again.

For example, the processing module 1102 uses the transceiver module 1101 to: receive first multicast service indication information from an application function AF network element, where the first multicast service indication information indicates a first multicast service; send, based on the first multicast service indication information, multicast service information to an access network device that serves a terminal device, where the multicast service information is used by the access network device to establish an association relationship between the terminal device and the first multicast service; and send forwarding rule information of the first multicast service to a user plane network element.

Optionally, the processing module 1102 further uses the transceiver module 1101 to receive a first message, where the first message includes information for determining the access network device that serves the terminal device, and the first message includes the first multicast service indication information from the AF network element.

The processing module 1102 is further configured to determine, based on the first message, the access network device that serves the terminal device.

Optionally, the processing module 1102 further uses the transceiver module 1101 to receive first indication information from the access network device, where the first indication information indicates whether the access network device has joined transmission of the first multicast service.

The processing module 1102 uses the transceiver module 1101 to send the forwarding rule information of the first multicast service to the user plane network element when the first indication information indicates that the access network device has not joined the transmission of the first multicast service.

Optionally, the processing module 1102 further uses the transceiver module 1101 to receive multicast service transmission tunnel information from the access network device, where the multicast service transmission tunnel information is used by the user plane network element to send data of the first multicast service to the access network device.

Optionally, the forwarding rule information of the first multicast service includes the multicast service transmission tunnel information.

Optionally, the user plane network element is a user plane network element corresponding to a PDU session of the terminal device.

Optionally, the processing module 1102 further uses the transceiver module 1101 to send user plane transmission information to the AF network element, where the user plane transmission information is used by the AF network element to send the data of the first multicast service to the user plane network element.

Optionally, the processing module 1102 further uses the transceiver module 1101 to send user plane transmission information to the AF network element when the session management network element determines that the user plane network element needs to join the transmission of the first multicast service, where the user plane transmission information is used by the AF network element to transmit the data of the first multicast service to the user plane network element.

Optionally, the user plane transmission information includes one or more of the following:
address information of the PDU session, address information corresponding to the user plane network element, or second indication information, where the second indication information is used by the AF network element to determine target address information of the data of the first multicast service.

Optionally, the processing module 1102 further uses the transceiver module 1101 to receive quality of service control information of the first multicast service from a policy control network element. The processing module 1102 is further configured to determine a quality of service flow identifier and quality of service configuration information of the first multicast service based on the quality of service control information. The processing module 1102 further uses the transceiver module 1101 to send the quality of service flow identifier and the quality of service configuration information to the access network device.

Optionally, the multicast service information includes one or more of the following:
the first multicast service indication information or the multicast service transmission tunnel information.

The multicast service transmission tunnel information is used by the user plane network element to send the data of the first multicast service to the access network device.

In a design, the communication apparatus 1100 is configured to perform the methods performed by the RAN in the method embodiments shown in FIG. 6 to FIG. 10. For related features, refer to the foregoing method embodiments. Details are not described herein again.

For example, the processing module 1102 uses the transceiver module 1101 to receive a second message, where the second message includes multicast service information corresponding to a first multicast service.

The processing module 1102 is configured to establish an association relationship between a terminal device and the first multicast service based on the second message.

Optionally, the second message is from an access management network element, and the second message is a PDU session management message of the terminal device.

Optionally, the multicast service information includes first multicast service indication information, and the first multicast service indication information indicates the first multicast service.

Optionally, the processing module 1102 is configured to: allocate multicast service transmission tunnel information to the first multicast service when context information of the first multicast service does not exist on the access network device, where the multicast service transmission tunnel information is used by a user plane network element to send data of the first multicast service to the access network device; store the context information of the first multicast service, where the stored context information of the first multicast service includes the multicast service transmission tunnel information; and associate the terminal device with the context information of the first multicast service.

Optionally, the processing module 1102 further uses the transceiver module 1101 to send the multicast service transmission tunnel information to a session management network element.

Optionally, the processing module 1102 is configured to associate the terminal device with context information of the first multicast service when the context information of the first multicast service exists on the access network device.

Optionally, the multicast service information includes multicast service transmission tunnel information, and the multicast service transmission tunnel information is used by a user plane network element to send data of the first multicast service.

The processing module 1102 is configured to add the terminal device for transmission of the data of the first multicast service.

Optionally, the user plane network element is a user plane network element corresponding to a PDU session of the terminal device.

Optionally, the processing module 1102 further uses the transceiver module 1101 to receive, from the session management network element, a quality of service flow identifier and quality of service configuration information that correspond to the first multicast service.

The processing module 1102 is further configured to establish a data radio bearer between the processing module 1102 and the terminal device based on the quality of service configuration information, where the data radio bearer is for transmitting the data of the first multicast service.

The processing module 1102 further uses the transceiver module 1101 to send configuration information of the data radio bearer to the terminal device.

Optionally, the processing module 1102 further uses the transceiver module 1101 to send first indication information to the session management network element based on the multicast service information, where the first indication information indicates whether the access network device has joined transmission of the first multicast service.

In a design, the communication apparatus 1100 is configured to perform the methods performed by the AF in the method embodiments shown in FIG. 6 to FIG. 10. For related features, refer to the foregoing method embodiments. Details are not described herein again.

For example, the processing module 1102 uses the transceiver module 1101 to send first multicast service indication information to a session management network element, where the first multicast service indication information indicates a first multicast service, and the session management network element is a session management network element corresponding to a PDU session of a terminal device.

The processing module 1102 further uses the transceiver module 1101 to: receive user plane transmission information from the session management network element, and send data of the first multicast service to a user plane network element based on the user plane transmission information.

Optionally, the user plane network element is a user plane network element corresponding to the PDU session.

Optionally, the user plane transmission information includes one or more of the following:
address information of the PDU session, address information corresponding to the user plane network element, or second indication information, where the second indication information is used by the AF network element to determine target address information of the data of the first multicast service.

For specific functions of the transceiver module 1101 and the processing module 1102, refer to the descriptions in the foregoing method embodiments. Details are not described herein again. In embodiments of this application, unit division is an example, is merely logical function division, and may be other division during actual implementation. In addition, functional units in embodiments of this application may be integrated into one processor, may exist alone physically, or two or more units may be integrated into one module. The foregoing integrated unit may be implemented in a form of hardware, or may be implemented in a form of a software functional module.

When the integrated unit is implemented in a form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a terminal device (which may be a personal computer, mobile phone, a network device, or the like) or a processor (processor) to perform all or some of the steps of the methods in embodiments of this application. The storage medium includes any medium such as a USB flash drive, a removable hard disk, a read-only memory (read-only memory, ROM), a random access memory (random access memory, RAM), a magnetic disk, or an optical disc, that can store program code.

In embodiments of this application, the SMF, the RAN, and the AF may be presented in a form of functional modules obtained through division in an integrated manner. The "module" herein may be a specific ASIC, a circuit, a processor that executes one or more software or firmware programs, a memory, an integrated logic circuit, and/or another device that can provide the foregoing function.

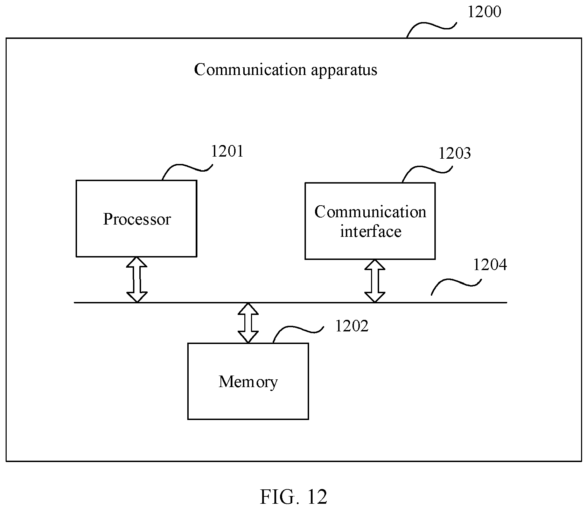

In a simple embodiment, a communication apparatus 1200 shown in FIG. 12 includes at least one processor 1201, a memory 1202, and optionally, may further include a communication interface 1203.

The memory 1202 may be a volatile memory such as a random access memory. Alternatively, the memory may be a non-volatile memory, for example, a read-only memory, a flash memory, a hard disk drive (hard disk drive, HDD), or a solid-state drive (solid-state drive, SSD). Alternatively, the memory 1202 is any other medium that can be for carrying or storing expected program code in a form of an instruction structure or a data structure and that can be accessed by a computer. However, this is not limited thereto. The memory 1202 may be a combination of the foregoing memories.

In this embodiment of this application, a specific connection medium between the processor 1201 and the memory 1202 is not limited. In this embodiment of this application, the memory 1202 is connected to the processor 1201 through a bus 1204 in the figure. The bus 1204 is indicated by a bold line in the figure. A mode of connection between other components is schematically described, and is not limited thereto. The bus 1204 may be classified into an address bus, a data bus, a control bus, and the like. For ease of representation, only one bold line is for representing the bus in FIG. 12, but this does not mean that there is only one bus or only one type of bus.

The processor 1201 may have a data sending/receiving function, and can communicate with another device. In the apparatus shown in FIG. 12, an independent data transceiver module, for example, the communication interface 1203, may also be disposed and is configured to send/receive data. When communicating with another device, the processor 1201 may perform data transmission through the communication interface 1203.

In an example, when a session management network element uses a form shown in FIG. 12, the processor in FIG. 12 may invoke computer-executable instructions stored in the memory 1202, so that the session management network element performs the method performed by the SMF in any one of the foregoing method embodiments.

In another example, when an access network device uses a form shown in FIG. 12, the processor in FIG. 12 may invoke computer-executable instructions stored in the memory 1202, so that the access network device performs the method performed by the RAN in any one of the foregoing method embodiments.

In another example, when an AF network element uses a form shown in FIG. 12, the processor in FIG. 12 may invoke computer-executable instructions stored in the memory 1202, so that the AF network element performs the method performed by the AF in any one of the foregoing method embodiments.

Specifically, functions/implementation processes of the processing module and the transceiver module in FIG. 11 may be implemented by the processor 1201 in FIG. 12 invoking the computer-executable instructions stored in the memory 1202. Alternatively, functions/implementation processes of the processing module in FIG. 11 may be implemented by the processor 1201 in FIG. 12 invoking the computer-executable instructions stored in the memory 1202, and functions/implementation of the transceiver module in FIG. 11 may be implemented through the communication interface 1203 in FIG. 12.

An embodiment of this application further provides a communication system. The communication system may include an SMF, a RAN, and an AF.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be for implementing each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

The computer program instructions may alternatively be stored in a computer-readable memory that can indicate the computer or the another programmable data processing device to work in a specific manner, so that the instructions stored in the computer-readable memory generate an artifact including an instruction apparatus. The instruction apparatus implements a specific function in one or more processes in the flowcharts and/or in one or more blocks in the block diagrams.

The computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to this application without departing from the scope of this application. This application is intended to cover these modifications and variations of this application provided that they fall within the scope of the claims of this application and their equivalent technologies.

## Claims

1. A multicast communication method, comprising:
receiving, by a session management network element, first multicast service indication information from an application function AF network element, wherein the first multicast service indication information indicates a first multicast service;
sending, by the session management network element based on the first multicast service indication information, multicast service information to an access network device that serves a terminal device, wherein the multicast service information is used for the access network device establishing an association relationship between the terminal device and the first multicast service; and
sending, by the session management network element, forwarding rule information of the first multicast service to a user plane network element.

2. The method according to claim 1, wherein the method further comprises:
receiving, by the session management network element, a first message, wherein the first message comprises information for determining the access network device that serves the terminal device, and the first message comprises the first multicast service indication information from the AF network element; and
determining, by the session management network element based on the first message, the access network device that serves the terminal device.

3. The method according to claim 1 or 2, wherein the method further comprises:
receiving, by the session management network element, first indication information from the access network device, wherein the first indication information indicates whether the access network device has joined transmission of the first multicast service; and
the sending, by the session management network element, forwarding rule information of the first multicast service to a user plane network element comprises:
sending, by the session management network element, the forwarding rule information of the first multicast service to the user plane network element when the first indication information indicates that the access network device has not joined the transmission of the first multicast service.

4. The method according to claim 1 or 2, wherein before the sending, by the session management network element, forwarding rule information of the first multicast service to a user plane network element, the method further comprises:
receiving, by the session management network element, multicast service transmission tunnel information from the access network device, wherein the multicast service transmission tunnel information is used for the user plane network element sending data of the first multicast service to the access network device.

5. The method according to claim 4, wherein the forwarding rule information of the first multicast service comprises the multicast service transmission tunnel information.

6. The method according to any one of claims 1 to 5, wherein the user plane network element is a user plane network element corresponding to a PDU session of the terminal device.

7. The method according to any one of claims 1 to 5, wherein the method further comprises:
sending, by the session management network element, user plane transmission information to the AF network element, wherein the user plane transmission information is used for the AF network element sending data of the first multicast service to the user plane network element.

8. The method according to any one of claims 1 to 5, wherein the method further comprises:
sending, by the session management network element, user plane transmission information to the AF network element when the session management network element determines that the user plane network element needs to join the transmission of the first multicast service, wherein the user plane transmission information is used by the AF network element to transmit the data of the first multicast service to the user plane network element.

9. The method according to any one of claims 6 to 8, wherein the user plane transmission information comprises one or more of the following:
address information of the PDU session, address information corresponding to the user plane network element, or second indication information, wherein the second indication information is used for the AF network element determining target address information of the data of the first multicast service.

10. The method according to any one of claims 1 to 9, wherein the method further comprises:
receiving, by the session management network element from a policy control network element, quality of service control information of the first multicast service;
determining, by the session management network element, a quality of service flow identifier and quality of service configuration information of the first multicast service based on the quality of service control information; and
sending, by the session management network element, the quality of service flow identifier and the quality of service configuration information to the access network device.

11. The method according to any one of claims 1 to 10, wherein the multicast service information comprises one or more of the following:
the first multicast service indication information or the multicast service transmission tunnel information, wherein
the multicast service transmission tunnel information is used by the user plane network element to send the data of the first multicast service to the access network device.

12. A multicast communication method, comprising:
receiving, by an access network device, a second message, wherein the second message comprises multicast service information corresponding to a first multicast service; and
establishing, by the access network device, an association relationship between a terminal device and the first multicast service based on the second message.

13. The method according to claim 12, wherein the second message is from an access management network element, and the second message is a PDU session management message of the terminal device.

14. The method according to claim 12 or 13, wherein the multicast service information comprises first multicast service indication information, and the first multicast service indication information indicates the first multicast service.

15. The method according to claim 14, wherein the establishing, by the access network device, an association relationship between a terminal device and the first multicast service comprises:
allocating, by the access network device, multicast service transmission tunnel information to the first multicast service when context information of the first multicast service does not exist on the access network device, wherein the multicast service transmission tunnel information is used for a user plane network element sending data of the first multicast service to the access network device;
storing, by the access network device, the context information of the first multicast service, wherein the stored context information of the first multicast service comprises the multicast service transmission tunnel information; and
associating, by the access network device, the terminal device with the context information of the first multicast service.

16. The method according to claim 15, wherein the method further comprises:
sending, by the access network device, the multicast service transmission tunnel information to a session management network element.

17. The method according to claim 14, wherein the establishing, by the access network device, an association relationship between a terminal device and the first multicast service comprises:
associating, by the access network device, the terminal device with context information of the first multicast service when the context information of the first multicast service exists on the access network device.

18. The method according to claim 12, wherein the multicast service information comprises multicast service transmission tunnel information, and the multicast service transmission tunnel information is used by a user plane network element to send data of the first multicast service; and
the establishing, by the access network device, an association relationship between a terminal device and the first multicast service comprises:
adding, by the access network device, the terminal device for transmission of the data of the first multicast service.

19. The method according to any one of claims 12 to 18, wherein the user plane network element is a user plane network element corresponding to a PDU session of the terminal device.

20. The method according to any one of claims 12 to 19, wherein the method further comprises:
receiving, by the access network device from the session management network element, a quality of service flow identifier and quality of service configuration information that correspond to the first multicast service;
establishing, by the access network device, a data radio bearer between the access network device and the terminal device based on the quality of service configuration information, wherein the data radio bearer is for transmitting the data of the first multicast service; and
sending, by the access network device, configuration information of the data radio bearer to the terminal device.

21. The method according to any one of claims 12 to 20, wherein the method further comprises:
sending, by the access network device, first indication information to the session management network element based on the multicast service information, wherein the first indication information indicates whether the access network device has joined transmission of the first multicast service.

22. A multicast communication method, comprising:
sending, by an AF network element, first multicast service indication information to a session management network element, wherein the first multicast service indication information indicates a first multicast service, and the session management network element is a session management network element corresponding to a PDU session of a terminal device.

23. The method according to claim 22, wherein the method further comprises:
receiving, by the AF network element, user plane transmission information from the session management network element; and
sending, by the AF network element, data of the first multicast service to a user plane network element based on the user plane transmission information.

24. The method according to claim 22, wherein the user plane network element is a user plane network element corresponding to the PDU session.

25. The method according to claim 23 or 24, wherein the user plane transmission information comprises one or more of the following:
address information of the PDU session, address information corresponding to the user plane network element, or second indication information, wherein the second indication information is used by the AF network element to determine target address information of the data of the first multicast service.

26. A communication apparatus, wherein the apparatus comprises a processing module and a transceiver module, and the processing module and the transceiver module are used by the apparatus to implement the method according to any one of claims 1 to 11.

27. A communication apparatus, wherein the apparatus comprises a processing module and a transceiver module, and the processing module and the transceiver module are used by the apparatus to implement the method according to any one of claims 12 to 21.

28. A communication apparatus, wherein the apparatus comprises a processing module and a transceiver module, and the processing module and the transceiver module are used by the apparatus to implement the method according to any one of claims 22 to 25.

29. A communication apparatus, wherein the apparatus is configured to perform the method according to any one of claims 1 to 11, the method according to any one of claims 12 to 21, or the method according to any one of claims 22 to 25.

30. A communication apparatus, comprising a processor, wherein the processor is coupled to a memory, the memory is configured to store a program or instructions, and when the program or the instructions are executed by the processor, the apparatus is enabled to perform the method according to any one of claims 1 to 11, the method according to any one of claims 12 to 21, or the method according to any one of claims 22 to 25.

31. A computer-readable storage medium, storing a computer program or instructions, wherein when the computer program or the instructions are executed, a computer is enabled to perform the method according to any one of claims 1 to 11, the method according to any one of claims 12 to 21, or the method according to any one of claims 22 to 25.

32. A chip, comprising a processor, wherein the processor is coupled to a memory, the memory is configured to store a program or instructions, and when the program or the instructions are executed by the processor, an apparatus is enabled to perform the method according to any one of claims 1 to 11, the method according to any one of claims 12 to 21, or the method according to any one of claims 22 to 25.

33. A communication system, wherein the system comprises the apparatus according to claim 26, the apparatus according to claim 27, and the apparatus according to claim 28.
